# DEMANDE DE BREVET EUROPEEN

(11) **EP 1 923 789 A1**
(43) Date de publication de la demande: **21.05.2008**
(21) Numéro de dépôt: 06124175.8
(22) Date de dépôt: 16.11.2006
(51) Int. Cl.: G06F 11/28

(54) **Procédé de contrôle de l'exécution d'un programme par un microcontrôleur**

(71) Demandeur: Nagracard S.A., 1033 Cheseaux-sur-Lausanne (CH)
(72) Inventeur: Gogniat, Christophe, 1022, Chavannes-près-Renens (CH); Hill, Michael John, 1296, Coppet (CH)
(74) Mandataire: Leman Consulting S.A.

(57) **Abrégé**

Le but de la présente invention est de proposer une méthode et un dispositif afin de pallier aux dégâts qu'une désynchronisation du compteur de programme peut provoquer.

Ce but est atteint par un procédé de contrôle de l'exécution d'un programme par un microcontrôleur comportant au moins une mémoire de programme et une unité de traitement, caractérisé en ce qu'il comporte les étapes de:
- séparation dudit programme en au moins deux blocs contenant chacun une pluralité d'instructions exécutables par ledit microcontrôleur;
- intégration à ces blocs d'au moins une zone de contrôle d'entrée (CTRL-E) contenant des conditions d'entrées;
- intégration à ces blocs d'au moins une zone de contrôle de sortie (CTRL-S) contenant des conditions de sortie;
- lors de l'exécution d'instructions dudit programme mémorisées dans un bloc donné, mise en oeuvre de tests de vérification de l'adéquation entre le déroulement effectif du programme et les conditions d'entrée et/ou de sortie; et
- mise en oeuvre de contre-mesures si les tests de vérification indiquent une inadéquation entre le déroulement effectif du programme et les conditions d'entrée et/ou de sortie.

## Description

### Introduction

La présente invention concerne le domaine des microcontrôleurs, en particulier le domaine de la sécurisation de l'exécution d'un programme par ledit microcontrôleur. Plus précisément, l'invention se propose d'empêcher que des perturbations ne permettent de dévoiler des informations confidentielles contenues dans une mémoire du microcontrôleur ou coopérant avec ce dernier. Cette invention peut notamment être appliquée à un module de sécurité à microprocesseur utilisé dans le domaine de la télévision à accès conditionnel.

### Etat de la technique

Il est bien connu qu'un programme utilisé par un microcontrôleur ou un microprocesseur est formé d'une suite d'instructions, elles-mêmes formées d'un code opérationnel (opcode) et éventuellement d'un ou plusieurs opérandes. Le premier octet d'une instruction ("opcode") joue un rôle important car il définit la fonction souhaitée. Selon l'instruction, un ou plusieurs octets complémentaires seront nécessaires pour former une instruction.

Selon le type de processeur, la taille d'un opcode peut par exemple être de 8, 12, 16 ou 32 bits. Un opcode peut être également temporairement sur une plus grande longueur.

Egalement de façon connue, le processeur exécute les instructions en fonction de la valeur contenue dans un compteur de programme.

Lorsqu'un processeur se désynchronise, par exemple suite à une erreur de programmation ou une perturbation extérieure, il se peut que son compteur de programme (PC) indique une position de la mémoire qui n'est pas un code opérationnel, mais un opérande.

Ces perturbations peuvent par exemple provenir de micro-interruptions de l'alimentation, de crêtes de tension sur le bus de connexion, de chocs thermiques chauds ou froids, d'exposition à un champ magnétique, d'exposition à une lumière laser, de particules alpha, etc.

Lorsqu'il se produit une telle perturbation extérieure, qui peut par exemple être volontairement réalisée sur le processeur par une personne mal intentionnée, ceci a pour effet d'interrompre l'exécution normale d'une ou plusieurs instructions. Par ce type de perturbations, il est possible qu'un programme d'exécution saute dans un endroit non prévu de ce programme. Il est également possible qu'une telle perturbation change le contenu du compteur de programme de telle façon que le déroulement ultérieur de ce programme se fasse sans passer par les instructions prévues préalablement et sans passer par les conditions d'accès associées. De cette façon, il arrive que des procédures de vérification ou d'authentification ne soient pas effectuées ou qu'un port de communication du module à microcontrôleur délivre des informations qui ne devraient normalement pas sortir du module de sécurité ou du microcontrôleur, comme par exemple des clés, des données et des parties de programmes.

### Brève description de l'invention

Le but de la présente invention est de proposer une méthode permettant d'éviter les conséquences possibles liées à un saut non prévu lors de l'exécution d'un programme. En particulier, cette méthode permet d'éviter que des informations confidentielles soient délivrées de façon indue.

Ce but est atteint par un procédé de contrôle de l'exécution d'un programme par un microcontrôleur comportant au moins une mémoire de programme et une unité de traitement, caractérisé en ce qu'il comporte les étapes de:
- séparation dudit programme en au moins deux blocs contenant chacun une pluralité d'instructions exécutables par ledit microcontrôleur;
- intégration à ces blocs d'au moins une zone de contrôle d'entrée (CTRL-E) contenant des conditions d'entrées;
- intégration à ces blocs d'au moins une zone de contrôle de sortie (CTRL-S) contenant des conditions de sortie;
- lors de l'exécution d'instructions dudit programme mémorisées dans un bloc donné, mise en oeuvre de tests de vérification de l'adéquation entre le déroulement effectif du programme et les conditions d'entrée et/ou de sortie; et
- mise en oeuvre de contre-mesures si les tests de vérification indiquent une inadéquation entre le déroulement effectif du programme et les conditions d'entrée et/ou de sortie.

Dans le procédé de l'invention, on sépare la mémoire contenant le programme exécutable en blocs, ces blocs étant indépendants et chacun d'eux ayant au moins deux zones de contrôle. L'une de ces zones de contrôle définit quelles sont les conditions que le programme doit remplir pour sortir de ce bloc et exécuter des instructions contenues dans un autre bloc et à quels emplacements le programme peut sauter. Une autre zone de contrôle contient la liste des adresses à partir desquelles il est possible d'entrer dans le bloc concerné, ainsi qu'éventuellement les conditions à remplir pour pouvoir exécuter les instructions contenues dans ce bloc. Une autre zone de contrôle optionnelle peut imposer un contrôle du déroulement du programme à l'intérieur d'un bloc.

Dans la présente invention, le passage d'un bloc à un autre est obligatoirement effectué par l'intermédiaire des zones de contrôle. De cette manière, si le programme saute de façon inattendue sans passer par au moins l'une des zones de contrôle, il pourra automatiquement être stoppé ou d'autres mesures peuvent être prises. De même, si le programme saute d'un bloc à un autre bloc sans que cela corresponde aux règles prévues, il est possible de prendre des mesures telles que l'arrêt du programme par exemple. La seule façon de ne pas bloquer le programme ou d'éviter les contre-mesures est de respecter les règles de passage d'un bloc à un autre.

### Brève description des figures

L'invention sera mieux comprise grâce à la description détaillée qui va suivre et qui se réfère aux dessins annexés, donnés à titre d'exemples nullement limitatifs, dans lesquels :
• la figure 1 illustre schématiquement les éléments utilisés pour la mise en oeuvre du procédé de la présente invention;
• la figure 2 représente un premier mode de réalisation de l'invention;
• la figure 3 représente un deuxième mode de réalisation de l'invention;
• les figures 4a et 4b représentent de façon détaillée, deux blocs de contrôle tels qu'utilisés dans les modes de réalisation des figures 2 et 3;
• la figure 5 représente de façon schématique un programme opérationnel formé de différents blocs de contrôle ainsi que le contenu de ces blocs; et
• la figure 6 représente sous forme de schéma bloc, le procédé de l'invention.

### Description détaillée de l'invention

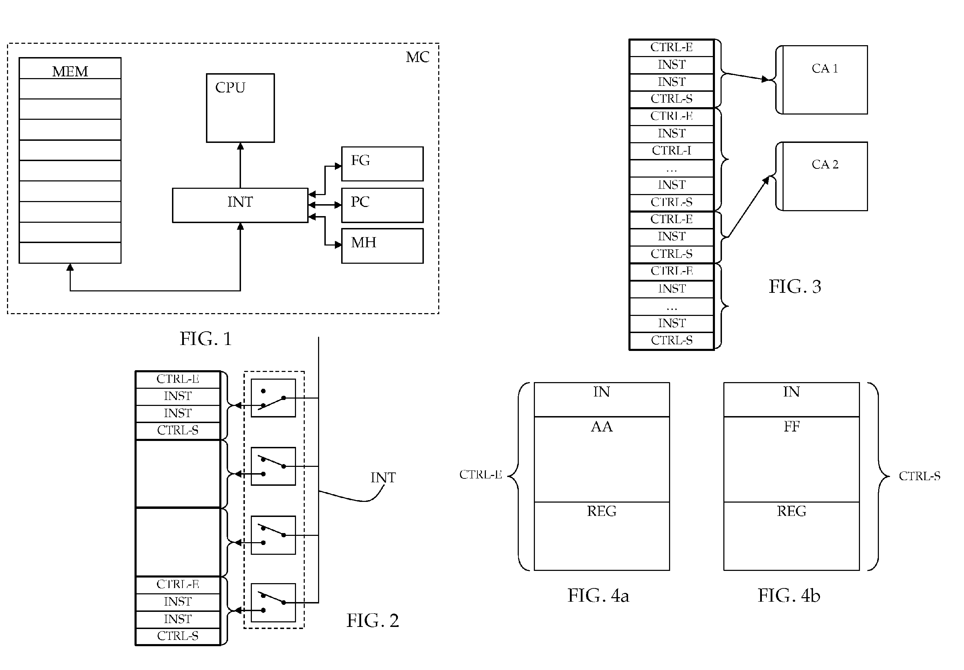

La figure 1 représente schématiquement un microcontrôleur MC comportant notamment une mémoire de programme MEM, une unité de traitement CPU, un compteur de programme PC et une interface INT. Ce microcontrôleur comporte en outre une mémoire d'historique MH dont la fonction est décrite plus bas.

La mémoire de programme MEM contient l'ensemble du programme exécutable et éventuellement des zones non utilisées. Cette mémoire peut être formée de différents types de support tels que notamment RAM, DRAM, ROM, EPROM, Flash.

L'interface INT du microcontrôleur MP est chargée notamment de la lecture des instructions contenues dans la mémoire selon le compteur de programme PC. Cette lecture se déroule selon les indications données de façon détaillées ci-dessous.

Le compteur de programme PC est en charge de mémoriser l'adresse de la prochaine instruction à traiter.

Dans une exécution normale d'un programme conventionnel selon l'art antérieur, on peut considérer qu'il existe deux types de situation lors de l'exécution d'une instruction:
- elle est exécutée juste après la précédente;
- elle est exécutée suite à un saut.

Dans le premier cas, le compteur de programme PC s'incrémente automatiquement à la fin du traitement de l'instruction précédente. Nous sommes dans un mode continu.

Dans le second cas, le compteur de programme PC est chargé avec une valeur pouvant provenir de plusieurs sources, par exemple un saut, un appel de sous-routine, un saut conditionnel ou une entrée d'interruption.

Dans le procédé de l'invention, le programme tel que mémorisé dans la mémoire de programme du microcontrôleur est séparé en blocs. Dans le mode de réalisation illustré par la figure 2, ces blocs ont tous une taille identique et fixe. Cette taille peut être différente d'une application à l'autre, mais dans le mode de réalisation choisi, elle ne peut pas être modifiée lorsqu'elle a été définie. Chacun de ces blocs comporte un certain nombre d'instructions, représentées par les lignes INST. Chaque bloc comporte également deux zones de contrôle dont l'une est placée en début du bloc, l'autre étant placée à la fin du bloc dans ce mode de réalisation. Il est à noter que l'emplacement des blocs de contrôle peut être différent dans d'autres réalisations.

Dans cette figure, l'interface INT est représentée comme un ensemble d'interrupteurs, un interrupteur pour chaque bloc de programme. Ces interrupteurs sont de préférence réalisés sous forme hardware et illustrent schématiquement la connexion entre l'unité de traitement du microcontrôleur et les blocs du programme d'exécution. L'interrupteur fermé pointant sur le bloc supérieur de la figure 2 indique que le contenu de ce bloc peut être utilisé pour être exécuté par l'unité de traitement ou en d'autres termes, que l'unité de traitement a accès au contenu de ce bloc. Celui-ci est dénommé "bloc actif". Les interrupteurs ouverts pointant sur les autres blocs, dits blocs inactifs, indiquent que ces autres blocs ou leur contenu ne sont pas accessibles et que les instructions qu'ils contiennent ne peuvent donc pas être exécutées par l'unité de traitement.

En ce qui concerne le bloc actif, c'est-à-dire celui qui est en communication avec l'unité de traitement par l'intermédiaire de l'interface, une fois que des tests de vérification ont été effectués dans la zone de contrôle d'entrée et passés avec succès, les instructions sont exécutées de façon conventionnelle à l'intérieur du bloc. Un registre d'instructions (non représenté) contient l'instruction en cours de traitement. Le compteur de programme PC mémorise l'adresse de la prochaine instruction à traiter.

La mémoire d'historique MH contient au moins l'adresse de la dernière instruction traitée dans le bloc précédent. La fonction de cette mémoire d'historique MH est explicitée plus en détail plus bas.

Dès le moment où une instruction située hors du bloc actif doit être exécutée, le programme doit passer par une zone de contrôle de sortie, notée CTRL-S sur les figures, contenue dans ce bloc actif.

La figure 4a illustre de façon détaillée, le contenu d'une zone de contrôle d'entrée CTRL-E. Cette zone contient en premier lieu une adresse d'entrée IN. Elle contient ensuite des conditions qui doivent impérativement être remplies pour que le programme puisse se dérouler normalement. Ces conditions peuvent notamment comporter une liste d'adresses de consigne ou adresses autorisées AA. Ces adresses de consigne sont les adresses à partir desquelles il est possible d'être envoyé dans le bloc actif considéré de façon légale, c'est-à-dire conformes au déroulement conventionnel du programme. Les conditions peuvent également concerner des valeurs qui doivent être stockées dans un emplacement spécifique tel qu'un registre ou une mémoire. D'autres conditions pourraient également être envisagées. Les conditions peuvent être définies lors de la réalisation du programme.

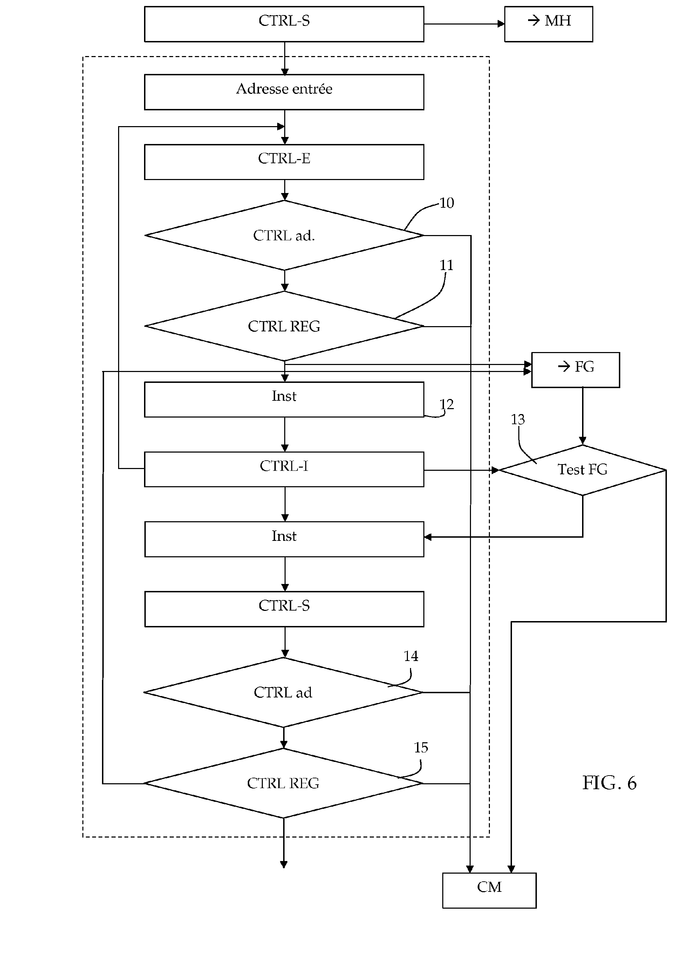

La figure 4b illustre de façon détaillée, le contenu d'une zone de contrôle de sortie CTRL-S. Cette zone contient des conditions similaires aux conditions de la zone de contrôle d'entrée. En particulier, elles contiennent une liste d'adresses de consigne ou adresses autorisées FF, qui sont les adresses auxquelles le programme peut être envoyé de façon légale. La zone de contrôle contient également une zone contenant des conditions relatives à l'état attendu d'une mémoire ou d'un ou de plusieurs registres. Ces conditions peuvent, comme précédemment être définies lors de la réalisation du programme et peuvent contenir par exemple une indication relative à l'état attendu d'une mémoire ou d'un ou de plusieurs registres. L'utilisation détaillée de ces zones de contrôle est expliquée en référence à la figure 6.

Dans le mode de réalisation illustré par la figure 3, le programme n'est pas séparé en blocs de tailles identiques, mais en blocs de tailles différentes. La taille de chaque bloc peut être définie en fonction du contenu logique du programme. Ainsi, les blocs peuvent contenir une ou plusieurs sous-routines, la taille des blocs dépendant alors de la taille des sous-routines.

Dans le mode de réalisation illustré par la figure 3, les blocs ne sont pas rendu actifs ou inactifs au moyen d'interrupteurs, mais sont placés dans une ou plusieurs mémoires caches. Selon le mode de réalisation illustré par la figure 3, deux caches sont utilisés. L'un des caches contient le bloc actif et l'autre contient un autre bloc. Cet autre bloc peut être choisi comme le bloc ayant la plus grande probabilité d'être le bloc actif suivant lors de l'exécution du programme.

Il est également possible de n'utiliser qu'un seul cache. Dans ce cas, lorsque le programme contenu dans le cache est exécuté et qu'un bloc actif suivant doit être utilisé, le cache est chargé avec le contenu du nouveau bloc.

L'utilisation de plusieurs caches permet d'éviter, pour autant que le contenu du deuxième cache ait été bien choisi, d'attendre que le contenu de ce nouveau cache soit introduit. Le microcontrôleur selon l'invention est tel que seul le contenu du cache actif est accessible par l'unité de traitement. Si le cache a une taille plus grande que le bloc de programme qui y est introduit, il est possible de placer dans ce cache des instructions permettant de réaliser des contre-mesures. Il est également possible de placer des contre-mesures dans un bloc spécifique.

La figure 3 comporte en outre des éléments de contrôle supplémentaires par rapport au mode de réalisation illustré par la figure 2. Ces éléments sont notés CTRL-1 est forment une zone de contrôle intermédiaire.

Lorsque le programme se déroule de façon conventionnelle, il est prévu qu'il arrive sur une telle zone de contrôle intermédiaire. Cette zone contient des instructions qui peuvent correspondre à deux modes de réalisation différents. Selon l'un des modes de réalisation, le programme est renvoyé sur la zone de contrôle d'entrée CTRL-E. Des tests de vérification de l'adéquation entre le déroulement effectif du programme et le déroulement attendu, tels que décrits plus bas sont effectués. En cas de déroulement du programme correspondant à ce qui a été prévu, les tests sont passés avec succès et le programme peut continuer sont déroulement normal.

En cas de déroulement anormal du programme, suite par exemple à une perturbation, les tests d'entrée sont effectués. Si les conditions pour passer à la suite du programme ne sont pas remplies, des contre-mesures sont prises. De cette manière, si une perturbation implique que le programme saute dans un endroit non prévu du bloc, un contrôle intermédiaire peut être effectué.

Selon un autre mode de réalisation, le microcontrôleur contient un marqueur FG. Lorsque le déroulement du programme implique que les tests prévus dans la zone de contrôle d'entrée CTRL-E sont passés avec succès, ce marqueur est mis à une valeur prédéfinie, par exemple 1.

Dans ce mode de réalisation, lorsque le programme arrive sur une zone de contrôle intermédiaire CTRL-I, la valeur du marqueur est vérifiée. Si cette valeur est à 1, cela signifie que les conditions de contrôle d'entrée ont déjà été vérifiées. Si au contraire, cette valeur est à zéro par exemple, cela signifie que les conditions d'entrée n'ont pas encore été vérifiées. Dans ce cas, des contre-mesures peuvent être prises. Dans ce mode de réalisation, le passage par la zone de contrôle de sortie a pour effet de remettre la valeur du marqueur à une valeur différente de la valeur prédéfinie, par exemple zéro.

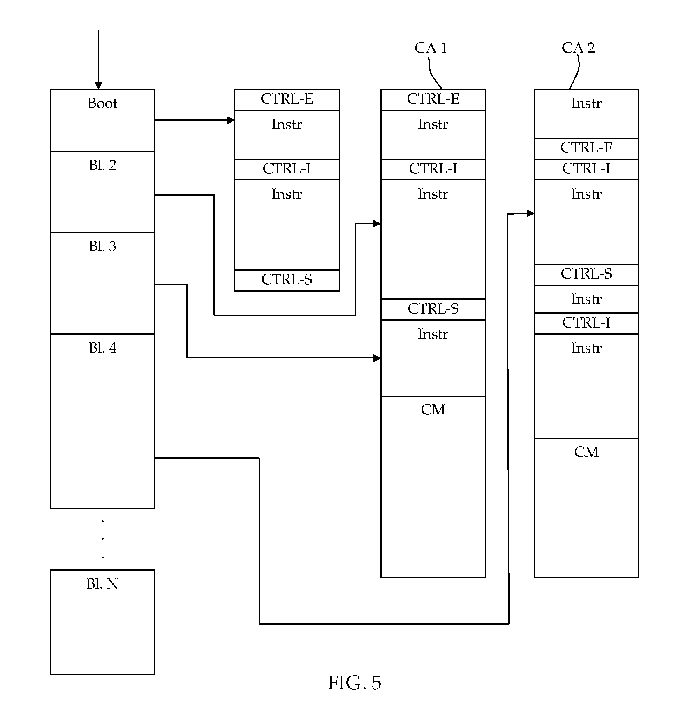

La figure 5 illustre d'une part le programme tel que mémorisé dans la mémoire du microcontrôleur, et d'autre part le même programme tel que séparé en blocs indépendants lors de son utilisation conformément au procédé de l'invention.

Dans la partie gauche de la figure, le programme est placé en continu. Il débute toujours par un bloc de démarrage (Boot), suivi de différents blocs (BL. 2, BL. 3, ..., BL. N) qui peuvent par exemple correspondre à des routines. Dans la partie droite de la figure, les blocs sont séparés et illustrent les parties du programme qui forment le bloc actif ou qui sont introduites dans les mémoires cache.

A titre d'exemple, le bloc de démarrage Boot contient une zone de contrôle d'entrée CTRL-E, une zone de contrôle intermédiaire CTRL-I, une zone de contrôle de sortie CTRL-S et des lignes d'instructions.

Les blocs 2 et 3 sont introduits dans un même cache CA 1. La place disponible dans le cache qui n'est pas occupée par les lignes d'instruction ou les zones de contrôle est occupée par des contre-mesures CM destinées à agir sur le contenu du cache en cas d'utilisation non conforme.

Le bloc 4 est introduit dans un cache CA 2. Les zones de contrôle ne sont pas placées en début de bloc, mais peuvent être placées n'importe où dans ce bloc.

La figure 6 illustre le déroulement du procédé selon la présente invention. Dans ce procédé, on peut distinguer deux phases. La première phase concerne le démarrage du programme après une remise à zéro (reset) ou après enclenchement d'un dispositif exécutant ce programme (ce démarrage étant couramment appelé boot) et la deuxième phase concerne le déroulement subséquent du programme. Dans la première phase, le programme débute dans un bloc initial, qui peut commencer à une adresse fixe. Ce bloc est référencé par BOOT à la figure 5. Cela signifie qu'après un démarrage ou une mise à zéro (reset), le programme débute toujours à la même adresse. Dans la deuxième phase, le programme débute à une adresse qui dépend du bloc traité, y compris le bloc de démarrage. Cette adresse est fixe pour chaque bloc, mais elle change bien entendu d'un bloc à l'autre. La figure 6 décrit plus spécifiquement la deuxième phase.

Lors du contrôle de sortie du dernier bloc actif exécuté, la mémoire d'historique MH a été remplie avec la dernière adresse utilisée.

Le programme débute donc à l'adresse d'entrée du bloc à exécuter ou bloc actif, celui-ci commençant par la zone de contrôle d'entrée CTRL-E. Celle-ci contient les adresses de provenance autorisées et les autres conditions qui doivent être remplies pour avoir l'autorisation de poursuivre le déroulement du programme. L'adresse de provenance est contrôlée lors d'une étape 10 de la figure 6. Si l'adresse réelle de laquelle vient le programme (adresse mémorisée dans la mémoire d'historique MH) fait partie de la liste des adresses admises AA (contenue dans la zone de contrôle), le déroulement du programme se poursuit à l'étape suivante 11. Si au contraire, l'adresse réelle, mémorisée dans la mémoire d'historique MH, ne fait pas partie de la liste autorisée, des contre-mesures sont prises. Ces contre-mesures, représentées par CM sur la figure, peuvent être le blocage du programme, l'incrémentation d'un compteur d'erreurs, l'effacement de données telles que des instructions du programme, des valeurs mémorisées ou toute autre mesure choisie par le programmeur.

Dans le cas où l'adresse est une adresse autorisée, le programme vérifie, dans une étape 11, si les conditions relatives à l'état des mémoires ou des registres sont remplies. Ces conditions sont indiquées dans la zone de contrôle et définissent des caractéristiques impératives qui doivent être respectées. Si les conditions impératives ne sont pas remplies, des contre-mesures sont prises. Si les conditions sont remplies, le déroulement du programme peut se poursuivre de façon conventionnelle, par l'exécution du code du programme, ce qui est représenté par la référence 12 sur la figure.

Comme indiqué précédemment, le programme peut contenir une ou plusieurs zones de contrôle intermédiaire CTRL-1. Dans l'un des modes de réalisation illustrés, lorsque l'adresse de provenance du programme et les conditions d'accès ont été vérifiées et remplies, le marqueur FG est mis à 1. Lorsque le programme arrive sur une zone de contrôle intermédiaire, un test est effectué, lors d'une étape 13, sur la valeur de ce marqueur. Si ce test indique que les conditions ont été remplies lors du contrôle dans la zone de contrôle (le marqueur vaut 1 dans notre exemple), le programme se déroule normalement par la suite des instructions.

Si au contraire, il apparaît que les conditions n'ont pas été remplies (le marqueur vaut 0 dans cet exemple), des contre-mesures CM sont prises.

Selon une variante, lorsque le programme arrive dans une zone de contrôle intermédiaire CTRL-I, il peut être renvoyé dans la zone de contrôle d'entrée CTRL-E où des tests sont de nouveau effectués.

Il est également possible à la fois de vérifier le marqueur et de re-effectuer les tests de la zone de contrôle d'entrée.

Lorsque le programme arrive à la fin du bloc actif ou qu'une instruction du programme pointe vers une adresse située en dehors de ce bloc, il est nécessaire de passer par la zone de contrôle de sortie CTRL-S avant d'être autorisé à exécuter des opérations d'un autre bloc. Cette zone de contrôle de sortie contient la liste des adresses desquelles le programme peut venir. Si le programme provient d'une adresse autorisée, ce qui est vérifié lors d'une étape 14, le programme peut en outre vérifier les autres conditions de sortie lors d'une étape 15. Ces conditions peuvent être du même type que les conditions d'entrées, c'est-à-dire qu'elles concernent l'état de mémoires ou de registres notamment. La zone de contrôle de sortie peut en outre comporter la liste des blocs dans lesquels le programme peut être dirigé.

Le programme est ensuite dirigé dans un bloc qui devient le nouveau bloc actif et le marqueur FG est remis à zéro. Le processus de contrôle d'entrée tel qu'expliqué ci-dessus recommence pour ce nouveau bloc actif. Bien entendu, si une violation des règles, que ce soit en sortie ou en entrée, est détectée, des contre-mesures, telles que notamment l'arrêt du programme avec éventuellement réinitialisation, peuvent être prises.

Le passage par la zone de contrôle de sortie CTRL-S a pour effet de définir quel est le bloc suivant qui aura le rôle de bloc actif selon le programme courant et de déconnecter l'accès aux autres blocs. Si le programme tente de sauter dans un bloc non autorisé, des contre-mesures pourront être prises. Si le programme est dirigé dans un bloc conforme aux règles de la zone de contrôle de sortie, le nouveau bloc sera le bloc actif, les autres blocs seront rendus inactifs et le programme se déroulera de façon conventionnelle.

En ce qui concerne la première phase de déroulement du programme, le procédé de l'invention est similaire à ce qui a été expliqué précédemment, à ceci près que l'entrée ne peut se faire que par une adresse. Lors du contrôle dans la zone de contrôle d'entrée, seule cette adresse est valable et permet l'exécution de la suite du programme.

Dans les modes de réalisation décrits ci-dessus, un seul bloc ou cache est actif, tous les autres blocs ou caches étant inactifs. En pratique, il est également possible d'avoir plusieurs blocs actifs, par exemple deux ou trois. Dans certains cas, ceci peut permettre un déroulement du programme plus rapide.
Les différents modes de réalisation décrits ci-dessus peuvent être combinés entre eux, sans sortir du cadre de l'invention. En particulier, les blocs peuvent être de taille variable ou fixe identiques ou différentes. L'interface pourrait fonctionner à la manière d'interrupteurs ou utiliser une ou plusieurs mémoires cache.

## Revendications

1. Procédé de contrôle de l'exécution d'un programme par un microcontrôleur comportant au moins une mémoire de programme et une unité de traitement, **caractérisé en ce qu'**il comporte les étapes de:
- séparation dudit programme en au moins deux blocs contenant chacun une pluralité d'instructions exécutables par ledit microcontrôleur;
- intégration à ces blocs d'au moins une zone de contrôle d'entrée (CTRL-E) contenant des conditions d'entrées;
- intégration à ces blocs d'au moins une zone de contrôle de sortie (CTRL-S) contenant des conditions de sortie;
- lors de l'exécution d'instructions dudit programme mémorisées dans un bloc donné, mise en oeuvre de tests de vérification de l'adéquation entre le déroulement effectif du programme et les conditions d'entrée et/ou de sortie; et
- mise en oeuvre de contre-mesures si les tests de vérification indiquent une inadéquation entre le déroulement effectif du programme et les conditions d'entrée et/ou de sortie.

2. Procédé de contrôle de l'exécution d'un programme selon la revendication 1, **caractérisé en ce que** les conditions d'entrée comportent des adresses de consigne correspondant à des instructions d'où le programme est autorisé à entrer dans ladite zone de contrôle d'entrée (CTRL-E).

3. Procédé de contrôle de l'exécution d'un programme selon la revendication 1, **caractérisé en ce que** les conditions de sortie comportent des adresses de consigne correspondant à des instructions auxquelles le programme est autorisé à aller.

4. Procédé de contrôle de l'exécution d'un programme selon la revendication 1, **caractérisé en ce que** lesdites conditions d'entrée et/ou de sortie comportent des conditions concernant au moins une valeur qui doit être contenue dans un emplacement spécifique.

5. Procédé de contrôle de l'exécution d'un programme selon la revendication 1, **caractérisé en ce que** les contre-mesures comportent l'interdiction de l'exécution subséquente d'instructions mémorisées dans un autre bloc que celui dans lequel la dernière instruction a été exécutée.

6. Procédé de contrôle de l'exécution d'un programme selon la revendication 1, **caractérisé en ce que** l'on intègre en outre dans ledit bloc au moins une zone de contrôle intermédiaire (CTRL-I).

7. Procédé de contrôle de l'exécution d'un programme selon la revendication 1, **caractérisé en ce que** lorsque le programme débute une instruction dans un bloc différent du bloc dans lequel l'instruction précédente a été effectuée, il effectue d'abord les tests de vérification contenus dans ledit bloc de contrôle d'entrée (CTRL-E).

8. Procédé de contrôle de l'exécution d'un programme selon la revendication 1, **caractérisé en ce que** lorsque le programme quitte un bloc pour exécuter une instruction contenue dans un autre bloc, il effectue, avant de quitter ce bloc, les tests de vérification contenus dans ledit bloc de contrôle de sortie (CTRL-S).

9. Procédé de contrôle de l'exécution d'un programme selon les revendications 2 et 7, **caractérisé en ce que** lesdits tests du bloc de contrôle d'entrée consistent à comparer l'adresse réelle de provenance du programme avec lesdites adresses de consigne.

10. Procédé de contrôle de l'exécution d'un programme selon la revendication 8, **caractérisé en ce que**, avant de quitter un bloc, une adresse correspondant à ce bloc est mémorisée dans une mémoire d'historique MH.

11. Procédé de contrôle de l'exécution d'un programme selon la revendication 1, **caractérisé en ce que** le microcontrôleur comporte un marqueur, ce marqueur étant forcé à une valeur prédéfinie lorsque les tests de vérification de la zone de contrôle d'entrée ont été passés avec succès.

12. Procédé de contrôle de l'exécution d'un programme selon la revendication 11, **caractérisé en ce que** le marqueur est forcé à une valeur différente de ladite valeur prédéfinie lorsque le programme quitte un bloc.

13. Procédé de contrôle de l'exécution d'un programme selon les revendications 6 et 11, **caractérisé en ce que** lorsque le programme arrive sur une zone de contrôle intermédiaire (CTRL-I), la valeur du marqueur est vérifiée, et **en ce que** si la valeur du marqueur est égale à ladite valeur prédéfinie, le programme se poursuit.

14. Procédé de contrôle de l'exécution d'un programme selon la revendication 6, **caractérisé en ce que** lorsque le programme arrive sur une zone de contrôle intermédiaire (CTRL-1), il est renvoyé sur la zone de contrôle d'entrée (CTRL-E).
